# EUROPÄISCHE PATENTSCHRIFT

(11) **EP 1 607 839 B1**
(45) Veröffentlichungstag und Bekanntmachung des Hinweises auf die Patenterteilung: **15.07.2009**
(21) Anmeldenummer: 04102783.0
(22) Anmeldetag: 17.06.2004
(51) Int. Cl.: G06F 3/01

(54) **System und Verfahren zur körpergesteuerten Eingabe von Datenelementen**
System and method for bodily controlled data input
Système et méthode pour entrer des données au moyen du corps

(43) Veröffentlichungstag der Anmeldung: 21.12.2005
(73) Patentinhaber: Swisscom AG, 3050 Bern (CH)
(72) Erfinder: Ritter, Rudolf, 3052, Zollikofen (CH); Lauper, Eric, 3014, Bern (CH)
(74) Vertreter: Scheuzger, Beat Otto

(56) Entgegenhaltungen:
- EP-A- 1 394 665
- US-A1- 2002 097 498
- KIM S C ET AL: "OPTIMUM ELECTRODE CONFIGURATION FOR DETECTION OF ARM MOVEMENT USING BIO-IMPEDANCE" MEDICAL AND BIOLOGICAL ENGINEERING AND COMPUTING, PETER PEREGRINUS LTD. STEVENAGE, GB, Bd. 41, Nr. 2, März 2003 (2003-03), Seiten 141-145, XP001047114 ISSN: 0140-0118

## Beschreibung

Die Erfindung betrifft eine Vorrichtung zur körpergesteuerten Eingabe von Datenelementen.

Im Bereich der Gebrauchselektronik, beispielsweise für kleinste tragbare Computer, elektronische Notizgeräte ("Pocket-PCs", "Handhelds", "Palmtops"), Mobiltelefone usw. werden immer kleinere Geräte entwickelt und vermarktet, so dass es bereits heutzutage für viele Benutzer schwierig ist, die Tastatur komfortabel zu bedienen. Vielen Geräten liegt ein Stift zur Eingabe von Datenelementen bei, mit welchem Stift beispielsweise Miniaturtasten zur Eingabe von Zeichen angetippt werden müssen. Auch ist weiterhin die Anzahl der Tasten eines Mobiltelefons stark begrenzt. Die Eingabe von Daten und/oder von Befehlen in ein Mobiltelefon erfordert oft zwei Hände, und nur sehr Geübte bringen es fertig, ihr Mobiltelefon ohne Sichtkontakt auch einhändig zu bedienen. Diese letztere Bedienungsmöglichkeit ist aber im Wesentlichen auf Zahlen beschränkt; Befehle, Auswahl der Menüs, Schreiben und Senden von Kurzmitteilungen (SMS) hingegen erfordert in der Regel die gleichzeitige Betrachtung einer Anzeige.

Seit etwa 10 Jahren kennt man ein Verfahren zu Anzeige von Texten und/oder Graphiken, das als VRD (Virtual Retinal Display) und neuerdings auch als RSD (Retinal Scanning Display) bezeichnet wird. Mit einem RSD werden Bilddaten direkt auf die Retina eines Benutzers projiziert, ohne dass der Benutzer auf einen Monitor blicken muss. Das anzuzeigende Bild wird beim RSD mit Hilfe eines äusserst schwachen in der Intensität modulierten und durch miniaturisierte Spiegel gerasteten Laserstrahls (im Nanowatt Bereich) direkt auf die Netzhaut des Betrachters projiziert, wo es sich dem Bild der realen Welt überlagert. Da das Bild ohne Umwege direkt ins Auge gelangt, ist auch bei niedrigen Energien des Laserstrahls die empfundene Helligkeit bereits ausreichend hoch und bedeutend höher als z.B. diejenige von Monitorbildern. Im Gegensatz zu herkömmlichen Monitoren sind die RSD-Anzeigegeräte tragbar und persönlich.

Eine Zusammenfassung der Veröffentlichungen auf diesem Gebiet, in der auch die Verwendung von Retinal Scanning Displays besprochen wird, findet sich in einem Seminarbericht von Dr. Marek Doniec (Universität Karlsruhe, Deutschland) mit dem Titel "Funktionsweise und Einsatzmöglichkeiten von Virtual Retinal Displays" (http://wwwipr.ira.uka.de/~megi/SEMINAR/WS_03_04/indexpro.html).

Es soll in dieser Beschreibung vorausgesetzt werden, dass dem Fachmann die Technik des RSD weitgehend bekannt ist, und diese Technik soll in diesem Dokument nicht in Einzelheiten beschrieben werden.

Die RSD-Technik erlaubt eine neuartige Darstellung von Bildern. Sie ermöglicht, wie auch die herkömmlichen Head Mounted Displays (HMDs), das Sichtfeld des Benutzers mit zweidimensionalen oder dreidimensionalen Bild- oder Nutzdaten zu erweitern, ohne dass dieser gezwungen wird, auf einen Monitor zu blicken, und wobei die RSD-Bilder wesentlich heller als entsprechende Monitorbilder sind. Die Technik kann daher auch in normalem Umgebungslicht verwendet werden.

Es wurde schon vorgeschlagen, die Eingabe von Daten mit Hilfe von optischen Systemen zu bewirken. Die US-Patentschrift Nr. 5,844,544 beschreibt ein System, bei dem ein Eingabefeld mit alphanumerischen Zeichen auf einen transparenten Schirm projiziert wird. Der Benutzer betrachtet durch einen halbdurchlässigen Spiegel den Schirm; gleichzeitig wird durch diesen Spiegel seine Augenbewegung verfolgt, und die Auswahl des betrachteten Zeichens erfolgt nach einem Protokoll, z.B. nach einsekündiger Betrachtung eines bestimmten Zeichens. Es ist wegen der im beschriebenen System vorhandenen Optik nicht möglich, eine RSD-Technik einzusetzen.

Die US-Patentanmeldung Nr. 2002/0097498 beschreibt ein System zur Abbildung der Netzhaut des Auges eines Benutzers. Das Bild der Netzhaut wird gespeichert und zur Identifizierung des Benutzers verwendet. Das System gestattet es, die Blickrichtung des Benutzers festzustellen und damit diejenige Stelle eines virtuellen Bildes, die er gerade betrachtet.

Auch wenn mit der RSD-Technolgie Fortschritte bei der Anzeige von Bilddaten erzielt wurden, so ist es für den Benutzer nach wie vor umständlich, insbesondere wenn sich der Benutzer nicht gerade an einem Büroarbeitsplatz mit einem Schreibtisch, einer Eingabetastatur und einer Eingabemaus befindet, diese Bilddaten interaktiv zu beeinflussen oder entsprechend der dargestellten Bilddaten bestimmte Datenelemente einzugeben.

In der Veröffentlichung "Optimum electrode configuration for detection of arm movement using bio-impedance", Kim et al., Medical & Biological Engineering & Computing, Vol. 41, Seiten 141-145, März 2003, wird ein System zur Messung von Impedanzen des Oberarms einer Person beschrieben sowie eine optimale Elektrodenkonfiguration zur Messung von Armbewegungen vorgeschlagen.

In der Veröffentlichung EP 1 394 665 A1 wird ein Eingabesystem zur Erkennung von Gesten wie "Greifen" oder "Loslassen" vorgeschlagen. Dazu werden Elektroden am Handgelenk eines Benutzers angebracht. Sobald der Benutzer eine bestimmte Geste wie beispielsweise das Ballen der Faust oder das Loslassen der Faust macht, verschieben sich durch die entsprechende geometrische Änderungen des Handgelenks die gegenseitigen Positionen der Elektroden. Die gegenseitige Verschiebung der Elektroden führt zu einer messbaren Änderung der Kapazität zwischen den Elektroden. Mittels einem benutzerspezifischen Trainingsverfahren können solche Kapazitätsänderungen einer bestimmten Geste zugeordnet werden.

Es ist Aufgabe der vorliegenden Erfindung, die erwähnten Nachteile zu überwinden und ein System und ein Verfahren zur Eingabe von Datenelementen zu schaffen, welches eine bequeme Eingabe von Daten ermöglicht, beispielsweise auch eine bequeme Eingabe von Datenelementen zur Beeinflussung von oder als Reaktion auf Bildinhalte welche einem Benutzer dargestellt werden, beispielsweise der Darstellung von Bildinhalten mit einem RSD-Gerät, wobei das System auch zur Prozess-Steuerung von Geräten, beispielsweise von Kommunikationsgeräten wie Mobiltelefonen, dienen kann.

Gemäss der vorliegenden Erfindung werden diese Ziele insbesondere durch die Elemente des unabhängigen Anspruchs erreicht. Weitere vorteilhafte Ausführungsformen gehen ausserdem aus den abhängigen Ansprüchen und der Beschreibung hervor.

Die erfindungsgemässe körpergesteuerte Vorrichtung zur Eingabe von Datenelementen enthält folgende Komponenten:
1. Mindestens zwei an einer Körperstelle eines Benutzers anbringbare Elektroden. Die Elektrode kann als Elektrodenpaar ausgeführt sein. Die Elektroden sind in ein am Handgelenk anbringbares Armband integriert. Die Elektroden sind beispielsweise Edelmetall- oder Stahlelektroden welche mit einem definierten Druck auf der Haut aufliegen und welche beispielsweise eine möglichst kleine Abhängigkeit der Übergangsimpedanz zwischen Elektrode und Körper gegenüber Hautparametern wie beispielsweise Schweiss aufweisen.
2. Ein Impedanzmodul zur Messung von Körper-Impedanzdifferenzen mittels der mindestens zwei Elektroden. Das Impedanzmodul kann beispielsweise einen Signalgenerator umfassen, mittels welches Signalgenerators über die mindestens zwei Elektroden kleine Ströme oder Spannungen mit bestimmbaren Signalfrequenzen in oder auf den Körper des Benutzers übertragbar sind. Das Impedanzmodul kann weiter ein Signalmessmodul umfassen, mittels welches Signalmessmoduls beispielsweise Signalreflexionen und/oder Signalwerte wie beispielsweise Spannungsdifferenzwerte über einem Elektrodenpaar erfassbar sind. Das Impedanzmodul kann weiter ein Berechnungsmodul umfassen, mittels welches Berechnungsmoduls basierend auf Daten des Signalgenerators und Daten des Signalmessmoduls Körper-Impedanzdifferenzen berechenbar sind. Beispielsweise können über ein Elektrodenpaar eines am Handgelenk eines Benutzers angebrachten Armbands Ströme von bestimmbaren Frequenzen in den Unterarm und die Hand eines Benutzers geleitet werden. Gleichzeitig kann die Spannungsdifferenz über dem Elektrodenpaar gemessen werden. Durch eine geeignete Wahl von Stromfrequenzen, beispielsweise mittels eines sweeps der Stromfrequenzen über ein Frequenzintervall, ist der Körper-Impedanzwert dieser Anordnung messbar. Führt nun der Benutzer beispielsweise den Daumen und den Zeigefinger zusammen, dann wird sich der Körper-Impedanzwert dieser Anordnung verändern. Dasselbe gilt, falls der Benutzer die Hand zu einer Faust ballt, oder den Daumen mit irgendeinem anderen Finger zusammenbringt. Generell werden mit der beschriebenen Anordnung Körper-Impedanzdifferenzen in Abhängigkeit der Fingerstellung messbar. Mit einem beispielsweise am Impedanzmodul angebrachten Lagesensor welcher die Handstellung und/oder die Handposition im Raum detektiert, werden Körper-Impedanzdifferenzen zusätzlich auch in Bezug auf die Handstellung und -position im Raum messbar.
3. Ein Zuordnungsmodul zur Zuordnung von Körper-Impedanzdifferenzen zu einem bestimmten Datenelement. In einer einfachen Ausführungsvariante werden Körper-Impedanzdifferenzen beispielsweise zur Erzeugung der Datenelemente "0" und "1", oder beispielsweise äquivalent zur Erzeugung der Datenelemente "Nein" und "Ja" verwendet. Beispielsweise ordnet das Zuordnungsmodul Körper-Impedanzdifferenzen welche kleiner als ein bestimmbarer Schwellwert sind dem Datenelement "0" zu. Das kann beispielsweise solange der Fall sein, als der Benutzer die Stellung der Finger nicht verändert. Körper-Impedanzdifferenzen können beispielsweise als Differenz zwischen dem Körper-Impedanzwert zu einem ersten Zeitpunkt und dem Körper-Impedanzwert zu einem zweiten Zeitpunkt gebildet werden. Körper-Impedanzdifferenzwerte können aber auch als Differenzwert der Körper-Impedanz zwischen mindestens zwei Elektroden gebildet werden. In einer Ausführungsvariante werden Körper-Impedanzwerte beispielsweise zur Erzeugung der Datenelemente "0", "1", "2", "3" und "4" verwendet, wobei beispielsweise das Datenelement "0" der offenen Hand ohne gegenseitige Berührung von Fingern, das Datenelement "1" der Berührung von Daumen und Zeigefinger, das Datenelement "2" der Berührung von Daumen und Mittelfinger, das Datenelement "3" der Berührung von Daumen und Ringfinger und das Datenelement "4" der Berührung von Daumen und kleinem Finger entspricht. Analog ist eine grosse Vielzahl weiterer Handstellungen, beispielsweise verschiedenartige Berührungen des Daumens mit dem Handballen, und somit eine grosse Vielzahl von Möglichkeiten zur Eingabe von Datenelementen denkbar. Das Zuordnungsmodul kann weiter auch so ausgeführt sein, dass einer bestimmten Sequenz von Körper-Impedanzdifferenzen ein bestimmtes Datenelement zugeordnet wird. Zur Verdeutlichung führe man sich beispielsweise eine Sequenz "Berührung Daumen-Zeigerfinger", "Berührung Daumen-Ringfinger" und "Berührung Daumen-Mittelfinger" vor Augen, wobei dieser Sequenz ein bestimmbares Datenelement zugeordnet ist. In einer einfachen Ausführungsvariante ist das Zuordnungsmodul so ausgebildet, dass nur ein einzelner Zustand detektierbar ist und dieser einzelne Zustand dem Klicken auf einer Maustaste zugeordnet ist. Beispielsweise hat die blosse Berührung von Daumen und Zeigefinger die gleiche Wirkung wie das Klicken auf eine Maustaste. Dies hat den Vorteil, dass die Befehleingabe in einem mobilen und beinahe handfreien Modus möglich ist.

Die erfindungsgemässe Vorrichtung besitzt vorzugsweise eine eigene Energieversorgung, im Allgemeinen eine Batterie, die auch als aufladbare Batterie ausgebildet und/oder aus Solarzellen aufgebaut sein kann.

In einer Ausführungsvariante verfügt die Vorrichtung über eine kabelbasierte Schnittstelle zur Übertragung von Körper-Impedanzdifferenzen, von Datenelementen und/oder von irgendwelchen anderen Daten oder Signalen zu mindestens einem Endgerät und/oder weiteren Geräten.

In einer Ausführungsvariante umfasst die Vorrichtung eine kontaktlose oder drahtlose Schnittstelle, beispielsweise eine Bluetooth-Schnittstelle oder irgendeine andere kontaktlose Schnittstelle, zur Übertragung von Körper-Impedanzdifferenzen, von Datenelementen und/oder von irgendwelchen anderen Daten oder Signalen zu mindestens einem Endgerät und/oder weiteren Geräten. Diese Ausführungsvariante hat u.a. den Vorteil, dass die Vorrichtung zur körperbasierten Eingabe von Datenelementen als eine für den Benutzer persönliche und bequem tragbare Vorrichtung ausgebildet werden kann, beispielsweise als eine Vorrichtung welche in einer Armbanduhr integriert ist, wobei der Benutzer die Vorrichtung zur Dateneingabe für verschiedene bestimmbare Geräte einsetzen kann, und wobei die Vorrichtung für den Benutzer ständig verfügbar ist. Die kontaktlose oder drahtlose Schnittstelle kann für einen bidirektionalen Daten- oder Signalaustausch ausgelegt sein. In einer einfacheren Ausführungsvariante kann die kontaktlose Schnittstelle für die blosse Einwegübertragung ausgelegt sein, wobei Daten von der Vorrichtung auf mindestens ein Endgerät und/oder weitere Geräte übertragen werden. Eine solche einfachere Ausführungsvariante hat u.a. den Vorteil, dass eine energiesparende Lösung realisierbar ist.

In einer Ausführungsvariante kann die Vorrichtung an jedem Arm getragen werden. Eine solche Ausführungsvariante hat u.a. Vorteile bei der Bedienung von Spielstationen oder von Endgeräten mit einer grossen Anzahl auszuwählenden Datenelementen.

In einer Ausführungsvariante umfasst die Vorrichtung zusätzlich eine Anzeigeeinheit zur Darstellung von Datenelementen. Die Vorrichtung umfasst beispielsweise ein Mobilendgerät, beispielsweise ein Mobilfunkgerät oder einen Personal Digital Assistant (PDA), wobei das Mobilendgerät über eine Anzeigeeinheit zur Darstellung von Datenelementen verfügt. Mit der erfindungsgemässen Vorrichtung zur körpergesteuerten Eingabe von Datenelementen kann der Benutzer gemäss einem Protokoll Datenelemente eingeben, beispielsweise kann die Berührung von Daumen und Zeigefinger die Darstellung eines ersten Adresseintrags einer Adressdatenbank auslösen, die Berührung von Daumen und Mittelfinger kann die Darstellung eines nächsten Adresseintrags auslösen, die Berührung von Daumen und Ringfinger kann die Darstellung eines vorherigen Adresseintrags auslösen und die Berührung von Daumen und kleinem Finger kann die Selektion des dargestellten-Adresseintrags, beispielsweise einen Anruf entsprechend dem gerade dargestellten Adresseintrags, auslösen. Das Zuordnungsmodul zur Zuordnung von Körper-Impedanzdifferenzen ist beispielsweise als Softwareprogramm auf dem Mobilendgerät implementiert und Körper-Impedanzdifferenzen werden beispielsweise über eine kontaktlose Schnittstelle, beispielsweise eine Bluetooth Schnittstelle oder irgendeine andere kontaktlose Schnittstelle, zwischen einem am Handgelenk des Benutzers angebrachten Armband und dem Mobilendgerät übertragen. Die Anzeigeeinheit zur Darstellung von Datenelementen kann aber auch als RSD ausgeführt sein, wobei das RSD beispielsweise die Anzeigeeinheit eines Mobilgeräts ergänzt oder ersetzt, und wobei das RSD beispielsweise über eine kontaktlose Schnittstelle, beispielsweise eine Bluetooth Schnittstelle oder irgendeine andere kontaktlose Schnittstelle, zur Übertragung von Daten, beispielsweise zur Übertragung von Daten zwischen einem Mobilendgerät und dem RSD, verfügt.

In einer Ausführungsvariante umfasst die Vorrichtung zusätzlich ein Blickrichtungserfassungsmodul zur Erfassung der Blickrichtung eines Benutzers. Solche Module sind auch als Eye Tracking System bekannt. Beispielsweise über eine optische Vorrichtung wird die Augapfelbewegung des Benutzers erfasst, wobei aus den Augapfelbewegungen des Benutzers die Blickrichtung des Benutzers bestimmbar ist. Das Blickrichtungserfassungsmodul umfasst vorzugsweise ebenfalls eine kontaktlose Schnittstelle, beispielsweise eine Bluetooth Schnittstelle oder irgendeine andere kontaktlose Schnittstelle, zur Übertragung von Blickrichtungsdaten. In einer weiteren Ausführungsvariante kann das Blickrichtungserfassungsmodul mittels des RSD realisiert werden, beispielsweise durch Anbringen einer Vorrichtung zur Erfassung von Reflexionen des von dem RSD eingestrahlten Laserlichts auf der Retina des Benutzers, wobei insbesondere die Bewegung von bestimmbaren Teilen der Retina erfassbar und der Blickrichtung des Benutzers zuordenbar sind. Blickrichtungsdaten können beispielsweise an das Zuordnungsmodul übertragbar sein und können beispielsweise mit Datenelementen der Anzeigevorrichtung korreliert sein. Somit kann die Anzeigevorrichtung beispielsweise eine Bildschirmtastatur darstellen, wobei beispielsweise das Blickrichtungserfassungsmodul der Blickrichtung des Benutzers Datenelemente der Anzeigevorrichtung zuordnet, beispielsweise ein bestimmbares Zeichen der Bildschirmtastatur. Blickrichtungsdaten können beispielsweise nur das Zeichen der Bildschirmtastatur umfassen, welches der Benutzer gerade betrachtet. Somit wird vom Zuordnungsmodul zu einem bestimmten Zeitpunkt beispielsweise das Zeichen der Bildschirmtastatur empfangen, welches der Benutzer gerade betrachtet, sowie Körper-Impedanzdifferenzen, welche, wie beschrieben, beispielsweise von der momentanen Fingerstellung von Daumen und Zeigefinger des Benutzers abhängen. Der Benutzer kann also durch Betrachten eines Zeichens der Bildschirmtastatur und durch gleichzeitiges Zusammendrücken von Daumen und Zeigefinger die Eingabe eines bestimmbaren Datenelements bewirken.

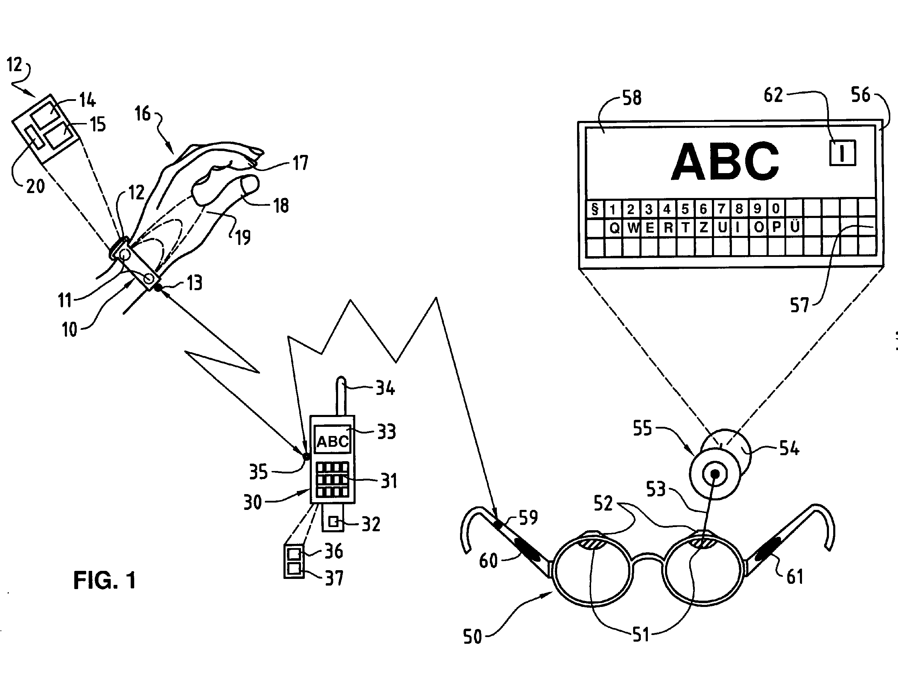

Nachfolgend wird eine Ausführung der vorliegenden Erfindung anhand eines Beispiels beschrieben. Das Beispiel wird durch die beigelegte Figur 1 illustriert.

Figur 1 zeigt schematisch ein Blockdiagramm mit den einzelnen Bestandteilen der erfindungsgemässen Vorrichtung zur körperbasierten Eingabe von Daten.

Im Folgenden soll die Erfindung an Hand des dargestellten Ausführungsbeispiels und der Zeichnungsfigur näher erläutert werden. Dieses Beispiel schränkt die Erfindung nicht ein, die in den anliegenden Patentansprüchen definiert ist.

Das Bezugszeichen 10 bezieht sich auf ein am Arm eines Benutzers getragenes Armband. Das Armband 10 ist als Eingabevorrichtung konzipiert, mit welcher eine Bestätigungs- oder Aktivierungsfunktion ausübbar ist. Das Armband 10 umfasst ein Elektrodenpaar 11, ein Elektronikmodul 12 sowie eine kontaktlose Schnittstelle 13. Das Elektronikmodul 12 umfasst ein Impedanzmodul 14 und kann gegebenenfalls ein Zuordnungsmodul 15 umfassen. Das Armband 10 weist eine nicht dargestellte Energiequelle auf, in der Regel eine Batterie oder einen Akkumulator.

Das Bezugszeichen 30 bezieht sich auf Endgerät, beispielsweise auf ein Endgerät mit einer Eingabeeinheit zur Eingabe von Datenelementen, beispielsweise auf ein Mobilendgerät, beispielsweise auf ein Mobilfunkgerät gemäss dem GSM, dem UMTS Standard oder irgendeinem anderen Mobilfunkstandard, auf einen Personal Digital Assistant (PDA) oder eine Spielstation. Das Endgerät 30 kann eine übliche Tastatur 31 oder eine ähnliche Eingabevorrichtung nach Art der Mobilfunktelefone aufweisen, die beispielsweise aus Zifferntasten und Steuertasten besteht, wobei Zifferntasten beispielsweise auf Buchstabeneingabe umschaltbar sind. Zum Zwecke der Berechtigung und Authentifizierung, beispielsweise bei einer Gebührenerfassung bei der Telekommunikation, enthält das Endgerät 30 in der Regel ein wegnehmbares Identifizierungsmodul, beispielsweise eine SIM (Subscriber Identity Module) Karte 32, die hier unten am Endgerät 30 dargestellt ist und beim Betrieb im Inneren des Endgerätes mit Kontakten in Berührung steht. Das Endgerät 30 kann zudem eine Anzeigevorrichtung 33 zur Darstellung von Datenelementen umfassen. Eine Antenne 34 dient in bekannter Weise zur Übermittlung von Daten über ein Telekommunikationsnetz, das in der Regel ein Mobilfunknetz ist, beispielsweise ein GSM (Global System for Mobile Communication) Netz, ein UMTS (Universal Mobile Telecommunication System) Netz oder ein WLAN (Wireless Local Area Network) Netz. Am Endgerät 30 ist beispielsweise eine kontaktlose Schnittstelle 35 angebracht, über welche Daten und Befehle empfangen und gesendet werden können. Anstelle der Antenne 34 kann beispielsweise auch eine Normbuchse zum Anschluss eines Kabels an ein Telekommunikations-Festnetz wie das öffentliche geschaltete Telefonnetz oder ein ISDN (Integrated Services Digital Network) Netz oder ein LAN (Local Area Network bzw. Wide Area Network) Netz vorhanden sein. In einer weiteren Ausführungsform umfasst das Endgerät 30 ein Zuordnungsmodul 36, welches beispielsweise als ein auf dem Endgerät 30 lauffähiges Softwareprogramm ausgeführt sein kann.

Das Bezugszeichen 50 bezieht sich auf eine Brille umfassend ein Retina-Scanning-Display (RSD) 51 sowie ein Eye Tracking System 52. Sowohl das RSD 51 als auch das Eye Tracking System 52 können nur für ein Auge oder auch für beide Augen vorgesehen sein. RSD 51 und Eye Tracking System 52 können als zwei separate Vorrichtungen aufgebaut sein oder sie können auch als eine einzelne Vorrichtung aufgebaut sein. Das RSD 51 projiziert Bilddaten über Strahlen 53 direkt auf die Retina 54 des Auges 55 eines Benutzers. Mit dieser Anordnung können dem Benutzer Bilddaten 56 visualisiert werden, beispielsweise eine Tastatur 57 und eine Textzeile 58. Die Bilddaten 56 umfassen beispielsweise auch ein Aktivierungsikon 62. Die Brille 50 umfasst weiter eine kontaktlose Schnittstelle 59, beispielsweise eine Bluetooth Schnittstelle oder irgendeine andere kontaktlose Schnittstelle, zur Übertragung von Daten, beispielsweise zur Übertragung von Bilddaten, von Blickrichtungsdaten oder von Datenelementen. Die Brille 50 umfasst weiter eine Steuerelektronik 60 zur Steuerung des RSD 51, des Eye Tracking System 52 und der kontaktlosen Schnittstelle 59 sowie eine Energiequelle 61, beispielsweise eine Batterie oder einen Akkumulator oder direkt auf dem Brillengestell angebrachte Solarzellen. Die Vorrichtungen der Brille 50, also beispielsweise das RSD 51, das Eye Tracking System 52, die kontaktlose Schnittstelle 59 oder die Energiequelle 61, sind über geeignete Mittel, beispielsweise Datenverbindungen oder Stromzuführungen, verbunden.

RSD Vorrichtungen sind bereits an sich bekannt und werden beispielsweise von der Firma Microvision, Inc., Seattle (WA, USA) hergestellt und vertrieben. Ein RSD enthält eine Steuerelektronik, eine modulierte Laserquelle, einen Scanner und eine Ausgabeoptik. Die Steuerelektronik stellt Informationen über die einzelnen Bildpunkte und deren Helligkeit bereit. Diese Bildpunkte werden dann durch Helligkeitsmodulation des Laserlichts erzeugt. Im kommerziellen Bereich sind momentan hauptsächlich monochrome RSDs üblich, bei denen lediglich ein roter Laserstrahl moduliert wird. Bei Farb-RSD, die noch in der Entwicklung stecken, sind dies drei Laserstrahlen (rot, grün und blau), von denen jeder einzeln moduliert und anschliessend alle drei zu einem Strahl zusammengeführt werden.

Dieser Strahl wird dann auf zwei Scanner umgeleitet. Der vertikale Scanner erzeugt dabei die Bildzeilen und der horizontale Scanner bewegt den Strahl schliesslich in jeder Zeile von Pixel zu Pixel. Mittlerweile werden die beiden Scanner oft in einem einzigen vereint. Microvision (www.mvis.com) benutzt dabei einen auf zwei Achsen angebrachten in so genannter MEMS-Technologie (Micro-electromechanical Systems) Spiegel, der weniger als 1 mm² klein ist. Dieser Spiegel vereint die Funktionen des horizontalen und des vertikalen Scanners und ermöglicht dadurch eine wesentlich kleinere Gerätegrösse.

Das durch die Scanner erzeugte Bild wird anschliessend durch eine Linse aufgefächert, da es sonst nur einen sehr kleinen Bereich der Netzhaut treffen würde, und über einen halbdurchlässigen Spiegel, der direkt vor dem Auge sitzt, durch die Pupille auf die Netzhaut projiziert. Der halbdurchlässige Spiegel führt dazu, dass das Bild der realen Welt nur abgedunkelt, jedoch sonst in keiner Weise verändert wird.

Die erfindungsgemässe Vorrichtung wird wie folgt benutzt und arbeitet wie nachstehend beschrieben.

Der Benutzer trägt das Armband 10, das beispielsweise auch mit einer Uhr versehen sein kann. Dabei legen sich die Kontakte 11 an die Haut des Handgelenks an. Sobald das Endgerät 30 eingeschaltet wird, werden über die kontaktlosen Schnittstellen 35 und 13 Aktivierungsbefehle zur Aktivierung des Armbands 10 übertragen.

Das im Armband 10 befindliche Impedanzmodul 14 speist über die Kontakte 11 einen Strom von einigen Mikroampere oder wenigen Milliampère in die darunterliegenden Körperteile ein, wobei zwischen den Kontakten 11 eine bestimmbare Potentialdifferenz entsteht. Werden nun zwei Finger aneinander gedrückt, beispielsweise die Finger 17 und 18, so entsteht ein veränderter Stromweg, der durch die Linien 19 angedeutet ist. Dadurch ändert sich die Potentialdifferenz zwischen den Kontakten 11. Diese Änderung wird vom Impedanzmodul 14 gemessen und an das Zuordnungsmodul 15 oder 36 übertragen. Das Zuordnungsmodul 15, 36 kann beispielsweise im Armband 10 als Zuordnungsmodul 15 angebracht sein, es kann aber auch beispielsweise als Zuordnungsmodul 36 im Endgerät 30 angebracht sein. Das Zuordnungsmodul 15, 36 kann beispielsweise als Softwareprogramm realisiert sein.

Das Impedanzmodul 14 kann aber auch einen frequenzvariablen Signalgenerator und ein entsprechendes Signalmessmodul umfassen, wobei Ströme oder Spannungen mit bestimmbaren Frequenzen erzeugbar sind und wobei Spannungen oder Ströme bestimmbarer Frequenzen messbar sind, und womit neben dem frequenzunabhängigen ohmschen Widerstand auch die frequenzabhängigen kapazitiven und/oder induktiven Komponenten der Körper-Impedanzdifferenzen messbar sind.

Das Zuordnungsmodul 15, 36 ordnet Körper-Impedanzdifferenzen bestimmbaren Datenelementen zu. Dazu umfasst das Zuordnungsmodul beispielsweise eine Lookup-Table mit gespeicherten Zuordnungen von bestimmbaren Körper-Impedanzdifferenzen und/oder Körper-Impedanzwerten zu bestimmbaren Datenelementen. Beispielsweise ordnet das Zuordnungsmodul 15, 36 das Datenelement "0" zu, solange ein Schwellwert einer Körper-Impedanzdifferenz nicht überschritten wird, und es ordnet das Datenelement "1" zu, sobald dieser Schwellwert überschritten wird. Das Zuordnungsmodul 15, 36 kann über einen Lern-Modus zur Speicherung der in der Lookup-Table gespeicherten Zuordnungen verfügen. Der Lern-Modus kann beispielsweise über einen geeigneten Mikroschalter oder über irgendeine andere Methode aktivierbar sein. Im Lern-Modus können bestimmbare Datenelemente, beispielsweise in sequentieller Reihenfolge, beispielsweise während bestimmbaren Zeitintervallen, gemessenen Körper-Impedanzdifferenzen bzw. der Körperstellung des Benutzers zugeordnet und in der Lookup-Table abgespeichert werden.

Normalerweise wird der Benutzer Daumen und Zeigefinger aneinanderdrücken, wodurch im Endeffekt, wie oben beschrieben, beispielsweise ein Mausklick ausgelöst wird. In dieser einfachen Ausführungsvariante reduziert sich die Lookup-Table zu einem einfachen Schwellwert. Das Zuordnungsmodul wird das Datenelement "Mausklick" in Bezug eine bestimmbare Beziehung zwischen Körper-Impedanzdifferenzen und diesem Schwellwert zuordnen, also beispielsweise sobald der Körper-Impedanzwert diesen Schwellwert unterschritten hat oder beispielsweise sobald Körper-Impedanzdifferenzen diesen Schwellwert überschreiten. Es ist aber auch möglich, eventuell nach einem kurzen Lernprozess, auch die anderen Finger zusammen mit dem Daumen zu verwenden. Jedes Mal sind dann die gemessenen Körper-Impedanzdifferenzen andere, und die elektronischen Komponenten der Vorrichtung lassen sich nach dem Wissen des Fachmanns so auslegen, dass unterschiedliche Potentialdifferenzen auch unterschiedliche Befehle ergeben. Es stehen also am Endgerät beispielsweise vier verschiedene Befehle zur Verfügung, wobei für diesen Fall die Lookup-Table auch über vier verschiedene Einträge verfügen wird.

Es ist auch möglich, mittels eines Sequenzmoduls 37 den Verlauf von Körper-Impedanzdifferenzen aufzuzeichnen und bestimmbaren Sequenzen von Körper-Impedanzwerten ein bestimmbares Datenelement zuzuordnen. Eine Sequenz von Körper-Impedanzwerten kann beispielsweise durch die sequentielle Berührung von Daumen und Zeigefinger, von Daumen und Mittelfinger und von Daumen und Ringfinger erstellt werden, womit die Anzahl zuordenbare Datenelemente vervielfacht wird.

Es ist auch möglich, die eingebbaren Datenelemente mit anderen Elementen zu kombinieren, beispielsweise wenn die Elektronik der Eingabevorrichtung über ein Lagesensor verfügt. Es können dann die weiteren bis zu vier Datenelemente eingegeben werden, wenn die Lage der Hand entsprechend verändert wird. Beispielsweise kann die Lage der Hand mit der Handfläche nach oben einer ersten Lage und die Lage der Hand mit der Handfläche nach unten einer weiteren Lage entsprechen.

Diese Eingabevorrichtung wird mit Vorteil zusammen mit den übrigen in Figur 1 dargestellten Geräten benutzt.

Beim Einschalten des Endgeräts 30 wird beispielsweise das Aktivierungsikon 62 abgebildet. Der Benutzer, der die Brille 50 aufgesetzt hat, betrachtet dieses Ikon, das in seinem Blickfeld erscheint. Wenn der Blick des Benutzers auf das Ikon 62 fällt, stellt die Steuerelektronik der Brille 50 diese Position fest, indem mittels des Eye Tracking Systems 52 die Blickrichtung des Benutzers abgetastet wird. Dieser Zustand wird kontaktlos über die kontaktlosen Schnittstellen 59 und 35 auf das Endgerät 30 übertragen.

Wenn der Benutzer nun einen Eingabebefehl durch Aneinanderdrücken zweier Finger gibt, wird mittels des RSD 51 die (nur zum Teil gezeigte) Tastatur 57 im Auge 55 des Benutzers dargestellt. Nun sei angenommen, dass das Wort "Swisscom" eingegeben werden soll. Der Benutzer betrachtet den Buchstaben S auf der Tastatur 57. Sofort stellt das Eye Tracking System 52 der Brille 50 fest, dass der Buchstabe "S" betrachtet wird und gibt diese Information über die kontaktlosen Schnittstellen 59 und 35 an das Endgerät 30 weiter. Wenn nun der Benutzer den Fingerkontakt herstellt, so wird auch dieser Befehl kontaktlos an das Endgerät 30 weitergegeben, womit die Eingabe des Datenelements "S" ausgelöst wird und der Buchstabe "S" in der Textzeile 58 dargestellt wird oder als Input an ein anderes System übertragen wird. Auf die gleiche Weise werden die anderen Buchstaben "w", "i", "s", "s", "c", "o" und "m" eingegeben, bis das Wort "Swisscom" zusammengestellt ist. Alle diese Vorgänge laufen nach einer Lernzeit überaus schnell ab.

Selbstverständlich werden auf dieselbe Art und Weise auch Zahlen und andere Befehle wie Leerstellen und Formatierungen eingegeben.

Die Vorrichtung zur körpergesteuerten Eingabe von Datenelementen können in vereinfachter Form auch ohne Eye Tracking System verwendet werden. Beispielsweise kann die Textzeile 58 Informationen oder Fragen darstellen, die dann durch einen Fingerbefehl entsprechend beantwortet werden. Anstatt einer Textzeile 58 können durch das RSD 51 auch beliebige andere Bilddaten, beispielsweise Graphikdaten oder Menustrukturen, dargestellt werden. Anschliessend kann dann auf die nächste Anzeige umgeschaltet werden, und zwar wiederum durch einen Fingerbefehl.

## Patentansprüche

1. Vorrichtung zur körpergesteuerten Eingabe von Datenelementen zur Steuerung eines Endgeräts (30), umfassend:
ein Armband (10) mit mindestens zwei an der Haut des Handgelenks eines Benutzers anlegbaren Elektroden (11) zur Einspeisunge eines Stroms in die Haut,
ein Impedanzmodul (14) zur Messung von Körper-Impedanzdifferenzen, welche durch eine durch ein Zusammenbringen von Körperteilen der Hand bewirkte Änderung der Stromwege verursacht werden, mittels der mindestens zwei Elektroden (11), und
ein Zuordnungsmodul (15) zur Zuordnung der gemessenen Impedanzdifferenzen zu einem zur Steurung des Engeräts (30) verwendbaren Datenelement.

2. Vorrichtung nach Anspruch 1, **dadurch gekennzeichnet, dass** die mindestens zwei Elektroden (11) ein Elektrodenpaar umfassen.

3. Vorrichtung nach einem der Ansprüche 1 bis 2, **dadurch gekennzeichnet, dass** ein Sequenzmodul (37) bestimmbare Sequenzen von Körper-Impedanzdifferenzen einem bestimmbaren Datenelement zuordnet.

4. Vorrichtung nach einem der Ansprüche 1 bis 3, **dadurch gekennzeichnet, dass** ein Lagemodul (20) Körper-Lagedaten des Benutzers erfasst und dass die Zuordnung zu einem bestimmbaren, zur Steuerung des Endgeräts (30) verwendbaren Datenelement auf Daten des Lagemoduls (20) basiert.

5. Vorrichtung nach einem der Ansprüche 1 bis 4, weiter umfassend eine kontaktlose Schnittstelle (13) zur kontaktlosen Übertragung von Körper-Impedanzdiffenzen und/oder von Datenelementen.

6. System umfassend ein Endgerät (30) und eine Vorrichtung gemäss einem der Ansprüche 1 bis 5 zur Steuerung des Endgeräts (30).

7. System, umfassend ein Endgerät (30) und eine Vorrichtung zur körpergesteuerten Eingabe von Datenelementen zur Steuerung des Endgeräts (30), wobei die Vorrichtung
ein Armband (10) mit mindestens zwei an der Haut des Handgelenks eines Benutzers anlegbaren Elektroden (11) zur Einspeisunge eines Stroms in die Haut, und
ein Impedanzmodul (14) zur Messung von Körper-Impedanzdifferenzen, welche durch eine durch ein Zusammenbringen von Körperteilen der Hand bewirkte Änderung der Stromwege verursacht werden, mittels der mindestens zwei Elektroden (11), umfasst, und wobei das Endgerät (30)
ein Zuordnungsmodul (36) zur Zuordnung der gemessenen Impedanzdifferenzen zu einem zur Steuerung des Endgeräts (30) verwendbaren Datenelement umfasst.

8. System nach Anspruch 6 oder 7, **dadurch gekennzeichnet, dass** eine Anzeigeeinheit (33, 51) des Endgeräts (30) vorgesehen ist.

9. System nach Anspruch 8, **dadurch gekennzeichnet, dass** die Anzeigeeinheit (51) als Retinal Scanning Display (RSD) ausgeführt ist.

10. System nach einem der Ansprüche 6 bis 9, weiter umfassend ein Blickrichtungserfassungsmodul (52) zur Erfassung der Blickrichtung des Benutzers.

## Claims

1. Device for body-controlled input of data elements for control of a terminal (30), comprising:
a wristband (10) with at least two electrodes (11) placeable on the skin of the wrist of a user for feeding a current into the skin,
an impedance module (14) for measurement, by means of the at least two electrodes (11), of body-impedance differences caused by a change in the current paths produced by a bringing together of the bodily parts of the hand, and
an assignment module (15) for assignment of the measured impedance differences to a data element usable for control of the terminal (30).

2. Device according to claim 1, **characterised in that** the at least two electrodes (11) include a pair of electrodes.

3. Device according to one of the claims 1 to 2, **characterised in that** a sequence module (37) assigns definable sequences of body-impedance differences to a definable data element.

4. Device according to one of the claims 1 to 3, **characterised in that** a position module (20) registers body-position data of the user, and **in that** the assignment to a definable data element usable for control of the terminal (30) is based on data of the position module (20).

5. Device according to one of the claims 1 to 4, further comprising a contactless interface (13) for contactless transmission of body-impedance differences and/or of data elements.

6. System comprising a terminal (30) and a device according to one of the claims 1 to 5 for control of the terminal (30).

7. System, comprising a terminal (30) and a device for body-controlled input of data elements for control of the terminal (30), the device comprising a wristband (10) with at least two electrodes (11), placeable on the skin of the wrist of a user for feed of a current into the skin, and
an impedance module (14) for measuring, by means of the at least two electrodes (11), body-impedance differences caused by a change in the current paths produced by a bringing together of bodily parts of the hand, and whereby the terminal (30)
comprises an assignment module (36) for assignment of the measured impedance differences to a data element usable for control of the terminal (30).

8. System according to claim 6 or 7, **characterised in that** a display unit (33, 51) of the terminal (30) is provided.

9. System according to claim 8, **characterised in that** the display unit (51) is implemented as Retinal Scanning Display (RSD).

10. System according to one of the claims 6 to 9, further comprising a view direction registration module (52) for registering the direction of view of the user.

## Revendications

1. Dispositif pour la saisie par commande corporelle d'éléments de données pour la commande d'un terminal (30), comprenant
un bracelet (10) avec au moins deux électrodes (14) applicables sur la peau du poignet d'un utilisateur pour alimenter un courant dans la peau,
un module d'impédance (14) pour la mesure de différences d'impédance corporelle qui sont provoquées par une modification provoquée par un rassemblement de parties corporelles de la main, au moyen au moins des deux électrodes (11) et
un module d'affectation (15) pour l'affectation des différences d'impédance mesurées à un élément de données utilisable pour la commande du terminal (30).

2. Dispositif selon la revendication 1, **caractérisé en ce qu'**au moins les deux électrodes (11) comprennent une paire d'électrodes.

3. Dispositif selon l'une des revendications 1 à 2, **caractérisé en ce qu'**un module de séquence (37) attribue des séquences déterminables de différences d'impédance corporelle à un élément de données déterminable.

4. Dispositif selon l'une des revendications 1 à 3 **caractérisé en ce qu'**un module de position (20) saisit des données de position corporelle de l'utilisateur et que l'affectation à un élément de données déterminable, utilisable pour la commande du terminal (30) est basée sur des données du module de position (20).

5. Dispositif selon l'une des revendications 1 à 4, comprenant en outre une interface sans contact (13) pour la transmission sans contact de différences d'impédance corporelles et/ou d'éléments de données.

6. Système comprenant un terminal (30) et un dispositif conformément à l'une des revendications 1 à 5, pour une commande du terminal (30).

7. Système comprenant un terminal (30) et un dispositif pour la saisie commandée corporellement d'éléments de données pour la commande du terminal (30), le dispositif comprenant un bracelet (10) avec au moins deux électrodes (11) applicables contre la peau du poignet d'un utilisateur d'un utilisateur pour alimenter un courant dans la peau,
un module d'impédance (14) pour la mesure de différences d'impédance corporelle qui sont provoquées par une modification provoquée par un rassemblement de parties corporelles de la main, au moyen au moins des deux électrodes (11) et le terminal (30) comprenant :
un module d'affectation (36) pour l'affectation des différences d'impédance mesurées d'un élément de données utilisable pour la commande du terminal (30).

8. Système selon la revendication 6 ou 7, **caractérisé en ce qu'**une unité d'affichage (33, 51) du terminal (30) est prévue.

9. Système selon la revendication 8, **caractérisé en ce que** l'unité d'affichage (51) est réalisée comme un affichage par balayage de la rétine (RSD = Retinal Scanning Display).

10. Système selon l'une des revendications 6 à 9, comprenant en outre un module de saisie (52) de la direction du regard de l'utilisateur.
